# EUROPEAN PATENT APPLICATION

(11) **EP 2 592 109 A1**
(43) Date of publication of application: **15.05.2013**
(21) Application number: 10854495.8
(22) Date of filing: 29.12.2010
(51) Int. Cl.: C08J 9/18, C08L 25/06, C08L 69/00, C08K 7/24

(54) **FLAME RETARDANT FOAM POLYSTYRENE BEAD AND METHOD FOR MANUFACTURING SAME**

(30) Priority: 08.07.2010 KR 20100065707
(71) Applicant: Cheil Industries Inc., Gyeongsangbuk-do 730-710 (KR)
(72) Inventor: KIM, Sang Hyuk, Uiwang-si Gyeonggi-do 437-711 (KR); CHO, Sa Eun, Uiwang-si Gyeonggi-do 437-711 (KR); LEE, Don Keun, Uiwang-si Gyeonggi-do 437-711 (KR)
(74) Representative: Bublak, Wolfgang
(86) International application number: PCT/KR2010/009534
(87) International publication number: WO 2012/005424

(57) **Abstract**

The flame retardant foam polystyrene bead according to the present invention comprises: (A) a mixed resin including (a1) about 90 wt% to about 99 wt% of a styrene resin and (a2) about 1 wt% to about 10 wt% of a char-generating thermoplastic resin; (B) inorganic foam particles dispersed in the mixed resin; and (C) a foaming agent impregnated into the mixed resin containing the dispersed inorganic foam particles. The foam produced using the flame retardant foam polystyrene bead has good flame retardancy, insulation, and mechanical strength properties.

## Description

### [Technical Field]

The present invention relates to a flame retardant foam polystyrene bead and a method for manufacturing the same. More particularly, the present invention relates to a flame retardant foam polystyrene bead exhibiting good flame retardancy, thermal insulation and excellent mechanical strength obtained by introducing a char-generating thermoplastic resin and inorganic foam particles into a styrene resin, and to a method for manufacturing the same.

### [Background Art]

Generally, foam molded articles of expandable polystyrenes exhibit high strength, light weight, buffering, waterproofing, heat keeping and thermal insulation properties and thus are used as packaging materials for home appliances, boxes for agricultural and fishery products, buoys, thermal insulation materials for housing and the like. Especially, 70% or more of domestic demands for expandable polystyrenes are used as thermal insulation materials for housing or cores of sandwich panels.

However, in recent years, the use of such expandable polystyrenes has been restricted since they are being blamed for fires. Thus, in order for the expandable polystyrenes to be employed as thermal insulation materials for housing and the like, it is necessary for the expandable polystyrenes to have flame retardancy to the level of flame retardant materials.

Korea Patent No. 0602205 discloses a method for manufacturing incombustible flame retardant polystyrene foam particles by coating expanded graphite, a thermosetting resin and a curing catalyst onto polystyrene foam particles and curing the resultant coated particles.

Korea Patent No. 0602196 discloses a method for manufacturing flame retardant polystyrene foam particles, which includes coating a metal hydroxide compound selected from the group consisting of aluminum hydroxide (Al(OH)₃), magnesium hydroxide (Mg(OH) ₂) and a mixture thereof, a thermosetting liquid phenol resin, and a curing catalyst for the phenol resin onto polystyrene foam particles and crosslinking the resultant coated particles.

In these patents, the surfaces of foam beads are crosslinked with a thermosetting resin, which inhibits secondary foaming of the beads by steam. Accordingly, these patents have demerits in that they cause decrease of strength and fusion between particles in the course of manufacturing molded articles (panels). Furthermore, these patents have disadvantages in that they cause environmental pollution due to the use of thermosetting resins, such as phenol, melamine and the like; they need additional facility investment to coat thermoset resins or inorganic materials; and they cause deterioration in physical properties of resins due to the use of the inorganic materials.

Therefore, there is a need for a method for manufacturing a flame retardant polystyrene foam resin capable of inhibiting fusion between particles and decrease of strength while preventing environmental pollution in the course of manufacturing molded articles.

### [Disclosure]

### [Technical Problem]

It is an object of the present invention to provide a foam polystyrene bead, which does not have a self-extinguishable flame retardant, but have good flame retardancy above flame retardant materials according to KS F ISO 5660-1, and a method for manufacturing the same.

It is another object of the present invention to provide a flame retardant foam polystyrene bead capable of being manufactured using commercially available products without any separate styrene polymerization processes or flame retardant coating processes and a method for manufacturing the same.

It is a further object of the present invention to provide a flame retardant foam polystyrene bead, which exhibits good flame retardancy, thermal insulation and excellent mechanical strength, and a method for manufacturing the same.

It is yet another object of the present invention to provide a flame retardant foam polystyrene bead capable of being manufactured with minimal facility investment without causing any environmental pollution and a method for manufacturing the same.

It is yet another object of the present invention to provide a flame retardant foam polystyrene bead having good processability and a method for manufacturing the same.

It is yet another object of the present invention to provide a method for manufacturing a flame retardant foam polystyrene bead having desired size at high yield.

It is yet another object of the present invention to provide a flame retardant foam polystyrene bead, which has an increased content of carbon particles and does not require any separate selection step, and a method for manufacturing the same.

It is yet another object of the present invention to provide a flame retardant polystyrene foam produced using the flame retardant foam polystyrene bead.

It is yet another object of the present invention to provide a flame retardant polystyrene foam produced using the flame retardant foam polystyrene bead and suitable for a sandwich panel due to outstanding balance of physical properties such as flame retardancy, thermal conductivity and mechanical strength.

The above and other objects can be accomplished by the present invention described in detail in the following.

### [Technical Solution]

An aspect of the present invention relates to a flame retardant foam polystyrene bead. The flame retardant foam polystyrene bead includes: (A) a mixed resin including (a1) about 90 wt% to about 99 wt% of a styrene resin and (a2) about 1 wt% to about 10 wt% of a char-generating thermoplastic resin; (B) inorganic foam particles dispersed in the mixed resin; and (C) a foaming agent impregnated into the mixed resin containing the dispersed inorganic foam particles.

In one embodiment, the styrene resin (a1) may have a weight average molecular weight in the range of about 180,000 g/mol to about 300,000 g/mol.

In one embodiment, the char-generating thermoplastic resin (a2) may have an oxygen bond, an aromatic group or a combination thereof, in a backbone of the char-generating thermoplastic resin.

In one embodiment, the char-generating thermoplastic resin (a2) may be at least one selected from the group consisting of polycarbonate, polyphenylene ether, polyurethane, polyphenylene sulfide, polyester, and polyimide resins.

In another embodiment, the char-generating thermoplastic resin (a2) may include at least one selected from the group consisting of polycarbonate, polyphenylene ether, and polyurethane resins.

The inorganic foam particles (B) may be at least one selected from the group consisting of expanded graphite, silicate, perlite and white sand.

In one embodiment, the inorganic foam particles (B) may be present in an amount of about 3 parts by weight to about 50 parts by weight based on 100 parts by weight of the mixed resin (A).

The inorganic foam particles (B) may have an average particle diameter of about 170 µm to about 1,000 µm.

The foaming agent (C) is characterized in that it may be present in an amount of about 3 parts by weight to about 8 parts by weight based on 100 parts by weight of the mixed resin containing the dispersed inorganic foam particles.

The flame retardant foam polystyrene bead further may include at least one additive selected from the group consisting of antiblocking agents, nucleating agents, antioxidants, carbon particles, fillers, antistatic agents, plasticizers, pigments, dyes, thermal stabilizers, UV absorbers, and flame retardants.

The flame retardant foam polystyrene bead may have an average particle diameter of about 0.5 mm to about 3 mm. Further, the foam produced using the flame retardant foam polystyrene bead may have a residual layer thickness of about 10 mm or more without causing any cracks when measured after heating a sample having a thickness of 50 mm at 50 kW/m² of radiation heat from a cone heater for five minutes in accordance with KS F ISO 5560-1.

Another aspect of the present invention relates to a method for manufacturing the flame retardant foam polystyrene bead. In one embodiment, the method includes: mixing (a1) a styrene resin, (a2) a char-generating thermoplastic resin and (B) inorganic foam particles to produce a mixed composition; extruding the mixed composition; and impregnating a foaming agent into the extruded mixed composition.

In one embodiment, the mixed composition may include 3 to 30 parts by weight of inorganic foam particles based on 100 parts by weight of the mixed resin including about 90 wt% to about 99 wt% of the styrene resin (a1) and about 1 wt% to about 10 wt% of the char-generating thermoplastic resin (a2).

The styrene resin (a1) may be resin pellets having a weight average molecular weight of about 180,000 g/mol to about 300,000 g/mol.

The styrene resin (a1) may be pellets including at least one additive selected from the group consisting of antiblocking agents, nucleating agents, antioxidants, carbon particles, fillers, antistatic agents, plasticizers, pigments, dyes, thermal stabilizers, UV absorbers, and flame retardants.

In one embodiment, the mixed composition may be extruded by adding at least one additive selected from the group consisting of antiblocking agents, nucleating agents, antioxidants, carbon particles, fillers, antistatic agents, plasticizers, pigments, dyes, thermal stabilizers, UV absorbers, and flame retardants.

### [Advantageous Effects]

The flame retardant foam polystyrene bead according to the present invention has advantageous effects in that it exhibits good flame retardancy; it may be produced using existing commercially available products without requiring any separate styrene polymerization processes or flame retardant coating processes; it exhibits good flame retardancy, thermal insulation and excellent mechanical strength properties; it does not cause environmental pollution; it is capable of being manufactured with little facility investment; it has good processability; it may be manufactured at high yield; it can increase carbon particle percentage; and it does not require any separate selection steps. The present invention also provides a method for manufacturing the flame retardant foam polystyrene bead.

### [Best Mode]

A flame retardant foam polystyrene bead of the present invention includes (A) a mixed resin including (a1) a styrene resin and (a2) a char-generating thermoplastic resin; (B) inorganic foam particles dispersed in the mixed resin; and (C) a foaming agent impregnated into the mixed resin containing the dispersed inorganic foam particles.

### (A) Mixed resin

The mixed resin (A) of the present invention includes (a1) about 90 wt% to about 99 wt% of a styrene resin and (a2) about 1 wt% to about 10 wt% of a char-generating thermoplastic resin.

### (a1) Styrene Resin

The styrene resin may be a homopolymer of styrene monomers, a copolymer of a styrene monomer and a copolymerizable monomer, or a mixture thereof. In another embodiment, the styrene resin may be a mixture of a styrene resin and other resins.

In one embodiment, the styrene resin (a1) may have a weight average molecular weight of about 180,000 g/mol to about 300,000 g/mol. Within the range, thermal insulation materials prepared using the styrene resin (a1) has merits in terms of good processability and mechanical strength.

In one embodiment, examples of the styrene resin (a1) may include common polystyrenes (GPPS), high impact polystyrene (HIPS) resins, copolymers of styrene monomers and α-methylstyrene, acrylonitrile-butadiene-styrene copolymers (ABS), styrene-acrylonitrile copolymers (SAN), styrene-methyl methacrylate copolymers, blends of styrene resins, polyemthyl methacrylate, and the like, without being limited thereto. These may be used alone or in combination of two or more thereof. Among these, general purpose polystyrenes (GPPS) and high impact polystyrene (HIPS) resins are preferably used.

### (a2) Char-Generating Thermoplastic Resin

The char-generating thermoplastic resin (a2) usable in the present invention may have an oxygen bond or an aromatic group, or both an oxygen bond and an aromatic group in a backbone thereof.

In one embodiment, examples of the char-generating thermoplastic resin (a2) may include polycarbonate, polyphenylene ether, polyurethane resins, and the like. These may be used alone or in combination of two or more thereof. In another embodiment, polyesters such as PPS, PET and PBT, polyimides, and the like may also be used. These resins can be used alone or in combination of two or more thereof.

In one embodiment, the polycarbonate may have a weight average molecular weight of about 10,000 g/mol to about 30,000 g/mol, preferably about 15,000 g/mol to about 25,000 g/mol.

In one embodiment, examples of polyphenylene ethers may include poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4- phenylene)ether and poly(2,3,6-trimethyl-1,4-phenylene)ether, and a copolymer of poly(2,6-dimethyl-1,4-phenylene)ether and poly(2,3,5-triethyl-1,4-phenylene)ether, and the like. Preferably, a copolymer of poly(2,6-dimethyl-1,4-phenylene)ether and poly(2,3,6-trimethyl-1,4-phenylene)ether and poly(2,6-dimethyl-1,4-phenylene)ether are used. Particularly, poly(2,6-dimethyl-1,4-phenylene)ether is preferred.

The polyphenylene ether may have an intrinsic viscosity of about 0.2 dl/g to about 0.8 dl/g. Within this range, good thermal stability and workability can be obtained.

Due to high glass transition temperature, the polyphenylene ether may provide much higher thermal stability when mixed with the styrene resin, and may be mixed with the styrene resin in any ratio.

Thermoplastic polyurethane may be prepared by reacting diisocyanate with a diol compound, and may include a chain transfer agent, as needed. Examples of diisocyanates may include aromatic, aliphatic and alicyclic diisocyanate compounds. Examples of diisocyanates may include 2,4- tolylene diisocyanate, 2,6- tolylene diisocyanate, phenylene diisocyanate, 4,4'-diphenyl methane diisocyanate, 4,4'-diphenyl diisocyanate, 1,5-naphthalene diisocyanate, 3,3'-dimethylbiphenyl-4,4'-diisocyanate, o-, m- or p-xylene diisocyanate, tetramethylene diisocyanate, hexamethylene diisocyanate, trimethyl hexamethylene diisocyanate, dodecanemethylene diisocyanate, cyclohexane diisocyanate, dicyclohexylmethane diisocyanate, and the like, without being limited thereto.

Examples of diol compounds may include polyester diol, polycaprolactone diol, polyether diol, polycarbonate diol or mixtures thereof. For example, mention can be made of ethylene glycol, 1,2-propylene glycol, 1,3-propylene glycol, butane 1,2-diol, butane 1,3-diol, butane 1,4-diol, butane 2,3-diol, butane 2,4-diol, hexane diol, trimethylene glycol, tetramethylene glycol, hexene glycol and propylene glycol, polytetramethylene ether glycol, dihydroxy polyethylene adipate, polyethylene glycol, polypropylene glycol, and the like, without being limited thereto.

In the present invention, the char-generating thermoplastic resin (a2) may be present in an amount of about 1 wt% to about 10 wt% in the mixed resin (A). If the amount of the char-generating thermoplastic resin (a2) is less than about 1 wt%, flame retardancy can be decreased as a result of decrease of char generation. If amount of the char-generating thermoplastic resin (a2) greater than about 10 wt%, mechanical properties can be decreased due to high glass transition temperature in preparation of thermal insulation materials. Preferably, the char-generating thermoplastic resin (a2) is present in an amount of about 3 wt% to about 7.5 wt%, more preferably about 4 wt% to about 7 wt%.

### (B) Inorganic foam particles

The inorganic foam particles may include at least one selected from the group consisting of expanded graphite, silicate, perlite, and white sand.

In the present invention, the inorganic foam particles may act as char formers. Accordingly, it is necessary for the inorganic foam particles to maintain their shape without any collapse upon melt extrusion with resins and to have a uniform size in order to provide flame retardancy, mechanical strength, and thermal conductivity.

The inorganic foam particles may have an average particle diameter of about 170 *µ*m to about 1,000 *µ*m. Within this range, the inorganic foam particles can act as char formers, thereby obtaining desired flame retardancy, mechanical strength, and thermal conductivity. The particle diameter is preferably about 200 *µ*m to about 750 *µ*m, more preferably about 300 *µ*m to about 650 *µ*m.

The expanded graphite may be prepared by inserting chemical species capable of being inserted into interlayers into layered crystal structures of graphite and subsequently subjecting the same to heat or microwave. In one embodiment, the expanded graphite may be prepared by treating graphite with an oxidizing agent in order to introduce chemical species, such as SO₃²⁻ and NO₃⁻ between the graphite layers to form interlayered compounds, rapidly subjecting the graphite in which interlayered compounds are formed to heat or microwave in order to gasify the chemical species bonded between interlayers, and then expanding the graphite by means of pressure resulted from gasification hundreds to thousands of times. Those expanded graphite can be commercially available ones.

In the present invention, it is preferred to use expanded graphite which expands at 200°C or more. When the expanded graphite subjected to expansion at 200°C or more is employed, it can be expected that the expanded graphite particles act as char formers since the expanded graphite particles are not deformed or collapsed upon polymerization. The expanded graphite preferably expands at about 250°C or more, more preferably at about 265°C or more, still more preferably at about 300°C or more. In one embodiment, the expansion temperature ranges from about 310°C to about 900°C.

The silicates may be organically modified layered silicates and preferably may include sodium silicate, lithium silicate, or the like. In the present invention, the silicate may generate char to form a blocking membrane, thereby maximizing flame retardancy. Clays such as smectites, kaolinites, illites, and the like may be organically modified and used as organically modified layered silicates. Examples of clays may include montmorillonites, hectorites, saponites, vermiculites, kaolinites, hydromicas, and the like. As a modifying agent in order to organize the clays, alkylamine salts or organic phosphates may be used. Examples of alkylamine salts may include didodecyl ammonium salt, tridodecyl ammonium salt, and the like. Examples of organic phosphates may include tetrabutyl phosphate, tetraphenyl phosphate, triphenyl hexadecyl phosphate, hexadecyl tributyl phosphate, methyl triphenyl phosphate, ethyl triphenyl phosphate, and the like. The alkylamine salts and organic phosphates may be substituted with interlayered metal ions of layered silicates to broaden the interlayer distance, thereby providing layered silicates compatible with organic materials and capable of being kneaded with resins.

In one embodiment, as the organically modified layered silicate, montmorillonite modified by a C₁₂-C₂₀ alkyl amine salt may be used. In some embodiments, the organically modified montmorillonite (hereinafter referred to as "m-MMT") may be organized at its interlayer with dimethyl dehydrogenated tallow ammonium instead of Na⁺.

The perlite may be heat-treated expanded perlite. The expanded perlite may be prepared by heating perlite at 870∼1100°C to vaporize volatile components including moisture together with generation of vaporizing pressure, thereby expanding each granule by about 10 to 20 fold via the vaporizing pressure to form round, glassy particles.

In one embodiment, the expanded perlite may have a specific gravity of 0.04 g/cm² to 0.2 g/cm². Within the range, the perlite exhibits good dispersion.

The white sand may be foam white sand.

In the present invention, the inorganic foam particles (B) may be present in an amount of about 3 parts by weight to about 50 parts by weight based on 100 parts by weight of the mixed resin particles (A). If the amount of the inorganic foam particles exceeds 50 parts by weight, processability can be deteriorated. If the amount of the inorganic foam particles is less than 3 parts by weight, flame retardancy can be deteriorated.

### (C) Foaming agent

The foaming agent is well known to those skilled in the art. Examples of foaming agents include C₃₋₆ hydrocarbons, such as propane, butane, isobutene, n-pentane, isopentane, neopentane, cyclopentane, hexane and cyclohexane; and halogenated hydrocarbons, such as trichlorofluoromethane, dichlorofluoromethane, dichlorotetrafluoroethane, and the like. Particularly, pentane is preferred.

In the present invention, the foaming agent may be present in an amount of about 3 parts by weight to about 8 parts by weight based on 100 parts by weight of the total of the mixed resin (A) and the inorganic foam particles (B) [(A) + (B)]. Within the range, good processability can be ensured.

The flame retardant foam polystyrene bead may further include conventional additives. Examples of additives may include antiblocking agents, nucleating agents, antioxidants, carbon particles, fillers, antistatic agents, plasticizers, pigments, dyes, heat stabilizers, UV absorbers, flame retardants, and the like. The additives may be used alone or in combination of two or more thereof.

The antiblocking agent may be optionally used to provide adhesion between particles upon foaming or to facilitate fusion between particles upon preparation of thermal insulation materials. For example, the antiblocking agent may be a copolymer of ethylene-vinyl acetate.

The nucleating agents may be polyethylene wax.

Examples of the flame retardants include phosphor flame retardants such as tris(2,3-dibromopropyl) phosphate, triphenylphosphate, bisphenol A diphenyl phosphate and the like or halogen flame retardants such as hexabromocyclododecane, tribromophenyl allylether, and the like. Preferably, bisphenol A diphenylphosphate is used.

### Method for manufacturing the flame retardant foam polystyrene bead

A further aspect of the present invention provides a method for manufacturing the flame retardant foam polystyrene bead. In one embodiment, the method includes: mixing (a1) a styrene resin, (a2) a char-generating thermoplastic resin and (B) inorganic foam particles to provide a mixed composition; extruding the mixed composition; and impregnating a foaming agent into the extruded mixed composition.

In one embodiment, the mixed composition may be prepared by mixing 100 parts by weight of the mixed resin, which includes about 90 wt% to about 99 wt% of the styrene resin (a1) and about 1 wt% to about 10 wt% of the char-generating thermoplastic resin (a2), with 3 to 30 parts by weight of the inorganic foam particles (B).

The styrene resin (a1) may be in the form of pellets. In other words, any commercially available styrene resin pellets may be used without any separate styrene polymerization process, thereby providing an economically feasible and simple process. In one embodiment, the styrene resin pellets may have a weight average molecular weight of about 180,000 g/mol to about 300,000 g/mol.

In one embodiment, the styrene resin pellets may optionally include nucleating agents, antioxidants, carbon particles, fillers, antistatic agents, plasticizers, pigments, dyes, thermal stabilizers, UV absorbers, flame retardants and the like. These additives may be used alone or in combination of two or more thereof.

The styrene resin (a1) may be pellets containing at least one additive selected from the group consisting of nucleating agents, antioxidants, carbon particles, fillers, antistatic agents, plasticizers, pigments, dyes, thermal stabilizers, UV absorbers, and flame retardants.

As such, the first pellets containing styrene resin may be mixed with the char-generating thermoplastic resin (a2) and the inorganic foam particles (B) to prepare a mixed composition.

Conventionally, the inorganic foam particles are coated onto outer surfaces of foam particles or added upon polymerization. However, in the case where the inorganic foam particles are added upon polymerization, the amount of the inorganic foam particles cannot be increased due to flocculation or collapse of the particles. In case where the inorganic foam particles are coated onto the outer surfaces of the foam particles, final molded products can have low strength. Accordingly, the present invention may prevent decrease in strength of the final molded products as well as flocculation or collapse of the particles by mixing the first pellets obtained from polymerization of styrene with the inorganic foam particles.

Optionally, the mixed composition may further include conventional additives, such as antiblocking agents, nucleating agents, antioxidants, carbon particles, fillers, antistatic agents, plasticizers, pigments, dyes, thermal stabilizers, UV absorbers, flame retardants and the like. These additives may be used alone or in combination of two or more thereof.

The mixed composition obtained by mixing the styrene resin (a1), the char-generating thermoplastic resin (a2) and the inorganic foam particles (B) are extruded to form second pellets.

The extruder is not particularly limited, but in order to obtain a desired grade, it is necessary to have a die plate hall diameter of about 0.7 mm to about 2.0 mm, preferably about 0.7 mm to about 1.7 mm, more preferably about 1.0 mm to about 1.5 mm. The obtained second pellets have a size of about 2 mm or less. Through extrusion, it is possible to obtain second pellets having a desired size at high yield.

The extrusion temperature is adjusted to about 130°C to about 250°C, preferably about 150°C to about 200°C.

By extruding before the introduction of the foaming agent, the present invention may enhance the content of carbon particles and obtain the desired size and grade at high yield without any separate selection step. In addition, the present invention may prevent explosion due to gas introduction upon extrusion.

The foaming agent is injected into the extruded second pellets to produce foam polystyrene. The foaming agent may be added in an amount of about 3 parts by weight to about 8 parts by weight based on 100 parts by weight of the second pellets obtained by mixing the mixed resin with the inorganic foam particles.

In one embodiment, a dispersant and an emulsifying agent are added to the second pellets and then heated to about 80°C to about 125°C, followed by adding the foaming agent. After adding the foaming agent to the second pellets, the temperature of the mixture may be maintained at about 100°C to about 120°C for 1 to 6 hours.

The dispersant may be prepared by stirring about 0.001 to 1.0 parts by weight of sodium pyrophosphate (10 hydrate) Na₄P₂O₇ · 10H₂O and about 0.001 to about 1.0 parts by weight of magnesium chloride (MgCl₂) in 100 parts by weight of deionized water.

The emulsifying agent may be any conventional emulsifying agent and may include, for example, sodium benzoate (DSM COMPANY), tricalcium phosphate (BUNDNHEIM C13-08), and the like.

The foam polystyrene prepared as mentioned above may be formed by injecting expandable gas into pellets having a constant size and thus the foam polystyrene having desired grade may be obtained at approximately 100% yield.

In one embodiment, the flame retardant foam polystyrene bead may have an average diameter of about 0.5 mm to about 3 mm.

A further aspect of the present invention provides flame retardant foam produced using the flame retardant foam polystyrene beads.

The foam produced using the flame retardant foam polystyrene bead may have a residual layer thickness of about 10 mm or more, preferably about 11 mm to about 45 mm when measured after heating a sample having a thickness of 50 mm at 50 kW/m² using a cone heater for five minutes in accordance with KS F ISO 5560-1.

The foam of the present invention may be employed as packaging materials for home appliances, boxes for agricultural and fishery products, thermal insulation materials for housing, and the like. Further, the foam has good flame retardancy, mechanical strength and thermal insulation, and thus may be suitably used as thermal insulation materials for housing and cores of sandwich panels manufactured by inserting thermal insulation core between iron plates.

The present invention will be explained in more detail with reference to the following examples. These examples are provided for illustration only and are not to be in any way construed as limiting the present invention.

### [Mode for Invention]

### EXAMPLES

### Example 1

To 95 parts by weight of GPPS pellets (a1) (GP HR-2390P00, Cheil Industries, Co., Ltd.) having a weight average molecular weight of 270,000 g/mol, 5 parts by weight of polyphenylene ether (a2) (PX100F, MEP Co., Ltd.) as a char-generating thermoplastic resin was added, followed by mixed with 15 parts by weight of an expanded graphite (B) (MPH503, ADT Co., Ltd.) having an average particle size of 297 µm and having an expansion temperature of 300°C to prepare a mixed composition. The mixed composition was extruded through a twin-screw extruder having a die plate hall diameter of 1.5 mm for pelletization. 0.8 parts by weight of sodium pyrophosphate (10 hydrate) Na₄P₂O₇ · 10H₂O and 0.9 parts by weight of magnesium chloride (MgCl₂) were stirred in 100 parts by weight of deionized water in a reactor. Then, 100 parts by weight of the extruded pellets and 0.1 by weight of calcium stearate were added to the mixture and heated to a temperature of 125°C. Then, 8 parts by weight of pentane mixed gas was added to the mixture and maintained at a temperature of 125°C for 6 hours to produce foam polystyrene beads. After drying for 5 hours, the coated foam polystyrene beads were placed in a plate molder and a steam pressure of 0.5 kg/cm² was applied thereto to obtain a desired foam molded article. Subsequently, the foam molded article was dried in a desiccator at 50°C for 24 hours and cut to prepare specimens for measuring flame retardancy, thermal conductivity and mechanical strength.

The prepared specimens were subjected to experiments to measure their physical properties in a manner described below.

### Methods for measuring physical properties

(1) Flame retardancy: Flame retardancy was evaluated in accordance with KS F ISO 5660-1 for testing incombustibility of internal finish materials and structure for buildings. A core sample having a size of 100 mm x 100 mm x 50 mm was manufactured and heated for 5 minutes to determine whether cracking occurred and to determine the residual layer thickness (mm). Further, gas toxicity testing was also performed.
(2) Thermal conductivity (W/m·K): Thermal conductivity was measured by a method for measuring thermal conductivity of heat keeping materials as prescribed in KS L9016 when the sample has a specific gravity of 30 kg/m³.
(3) Compressive strength (N/cm²): Compressive strength was measured by a method for measuring compressive strength of foam polystyrene heat keeping materials as prescribed in KS M 3808 when the sample has a specific gravity 30 kg/m³.
(4) Flexural strength (N/cm²): Flexural strength was measured by a method for measuring flexural strength of foam polystyrene heat keeping materials as prescribed in KS M 3808 when the sample has a the specific gravity of 30 kg/m³.

### Example 2

Specimens were prepared in the same manner as in Example 1 except that 5 parts by weight of bisphenol A diphenylene phosphate (CR-741, DAIHACHI Co., Ltd.) was further added as a flame retardant in the preparation of the mixed composition.

### Example 3

Specimens were prepared in the same manner as in Example 1 except that polycarbonate (SC-1620, Cheil Industries, Co., Ltd.) having a flow index (250°C, 12 kg) of 10.5 g/10 min was used as a char-generating thermoplastic resin instead of polyphenylene ether.

### Example 4

Specimens were prepared in the same manner as in Example 1 except that HIPS pellets (GP HF 2660, Cheil Industries, Co., Ltd.) having a weight average molecular weight of 220,000 g/mol were used as a styrene resin.

### Example 5

Specimens were prepared in the same manner as in Example 4 except that polycarbonate (SC-1620, Cheil Industries, Co., Ltd.) having a flow index (250°C, 12 kg) of 10.5 g/10 min was used as a char-generating thermoplastic resin instead of polyphenylene ether.

### Example 6

Specimens were prepared in the same manner as in Example 1 except that 15 parts by weight of expanded graphite (B-2) (KP5095, PingDu HuaDong Co., Ltd.) having an expansion temperature of 220∼250°C and an average particle size of 279 µm was used.

### Comparative Example 1

Specimens were prepared in the same manner as in Example 1 except that 2 parts by weight of expanded graphite was used to prepare the mixed composition. In flame retardancy testing in accordance with KS F ISO 5660-1 for testing incombustibility of internal finishing materials and structure for buildings, due to lack of expanded carbon layer upon combustion, thermal transfer could not be prevented, which left little residual layer after complete combustion, thereby causing some cracks. Therefore, the specimens failed to exhibit physical properties equivalent to those of flame retardant materials.

### Comparative Example 2

Specimens were prepared in the same manner as in Comparative Example 1 except that polycarbonate (SC-1620, Cheil Industries, Co., Ltd.,) having a flow index (250°C, 12 kg) of 10.5 g/10 min was used as a char forming resin. In flame retardancy testing in accordance with KS F ISO 5660-1, due to lack of the expanded carbon layer upon combustion, thermal transfer could not be prevented, which left little residual layer after complete combustion, thereby causing cracking.

### Comparative Example 3

Specimens were prepared in the same manner as in Comparative Example 1 except that HIPS pellets (GP HF 2660, Cheil Industries, Co., Ltd.,) having a weight average molecular weight of 220,000 g/mol as a styrene resin and 2 parts by weight of expanded graphite having an average particle size of 297 µm were introduced. In flame retardancy testing in accordance with KS F ISO 5660-1, due to lack of expanded carbon layer upon combustion, thermal transfer could not be prevented, which left little residual layer after complete combustion, thereby causing cracking.

### Comparative Example 4

Specimens were prepared in the same manner as in Example 1 except that 0.5 parts by weight of polycarbonate (SC-1620, Cheil Industries, Co., Ltd.,) having a flow index (250°C, 12 kg) of 10.5 g/10 min was used as a char-generating thermoplastic resin instead of polyphenylene ether. In flame retardancy testing in accordance with KS F ISO 5660-1, due to lack of expanded carbon layer upon combustion, thermal transfer could not be prevented, which left little residual layer after complete combustion, thereby causing cracking.

### Comparative Example 5

Specimens were prepared in the same manner as in Example 1 except that expanded graphite (B-1) having the same average particle size but a foaming temperature of 180°C (MPH-502, ADT Co., Ltd.) was used. Upon extrusion through the twin screw extruder, the expanded graphite was expanded due to the extrusion temperature and thus it was impossible to carry out regular extrusion.

### Comparative Example 6

Specimens were prepared in the same manner as in Example 1 except that 15 parts by weight of expanded graphite (B-3) (KP295, PingDu HuaDong Co., Ltd.) having an average particle size of 74 µm was mixed to prepare the mixed composition. In flame retardancy testing in accordance with KS F ISO 5660-1, due to lack of expanded carbon layer upon combustion, thermal transfer could not be prevented, which left little residual layer after complete combustion, thereby causing cracking. Therefore, the specimens failed to exhibit physical properties equivalent to those of flame retardant materials.

### Comparative Example 7

Specimens were prepared in the same manner as in Example 1 except that 15 parts by weight of expanded graphite (B-4) (KP195, PingDu HuaDong Co., Ltd.) having an average particle size of 149 µm was mixed to prepare the mixed composition. In flame retardancy testing in accordance with KS F ISO 5660-1, due to lack of expanded carbon layer upon combustion, thermal transfer could not be prevented, which left little residual layer after complete combustion, thereby causing cracking. Therefore, the specimens failed to exhibit physical properties equivalent to those of flame retardant materials.

**TABLE 1**

| | | Example | | | | | |
|---|---|---|---|---|---|---|---|
| | | 1 | 2 | 3 | 4 | 5 | 6 |
| (a1) | GPPS | 95 | 95 | 95 | - | - | 95 |
| | HIPS | - | - | - | 95 | 95 | - |
| (a2) | PPE | 5 | 5 | - | 5 | - | 5 |
| | PC | - | - | 5 | - | 5 | - |
| (B) | | 15 | 15 | 15 | 15 | 15 | - |
| (B-1) | | - | - | - | - | - | - |
| (B-2) | | - | - | - | - | - | 15 |
| Flame retardant | | - | 5 | - | - | - | - |
| Flame retardancy (residual layer thickness: mm) | | 15 | 17 | 12 | 13 | 11 | 12 |
| Cracking | | No | No | No | No | No | No |
| Thermal conductivity | | 0.032 | 0.033 | 0.033 | 0.033 | 0.034 | 0.033 |
| Compressive strength | | 18.8 | 18.3 | 18.0 | 18.0 | 17.7 | 18.2 |
| Flexural strength | | 37.2 | 37.1 | 37.2 | 37.2 | 37.5 | 34.1 |

**TABLE 2**

| | | Comparative Example | | | | | | |
|---|---|---|---|---|---|---|---|---|
| | | 1 | 2 | 3 | 4 | 5 | 6 | 7 |
| (a1) | GPPS | 95 | 95 | - | 99.5 | 95 | 95 | 95 |
| | HIPS | - | - | 95 | - | - | - | - |
| (a2) | PPE | 5 | - | 5 | - | 5 | 5 | 5 |
| | PC | - | 5 | 0 | 0.5 | - | - | - |
| (B) | | 2 | 2 | 2 | 15 | - | - | - |
| (B-1) | | - | - | - | - | 15 | - | - |
| (B-2) | | - | - | - | - | - | - | - |
| (B-3) | | - | - | - | - | - | 15 | - |
| (B-4) | | - | - | - | - | - | - | 15 |
| Flame retardant | | - | - | - | - | - | - | 5 |
| Flame retardancy (residual layer thickness: mm) | | 0 | 0 | 0 | 3 | Extrusion Impossible | 4 | 5 |
| Cracking | | Occur | Occur | Occur | Occur | - | Occur | Occur |
| Thermal conductivity | | 0.033 | 0.034 | 0.033 | 0.034 | - | 0.033 | 0.034 |
| Compressive strength | | 17.8 | 18.0 | 18.1 | 17.9 | - | 18.0 | 17.9 |
| Flexural strength | | 37.1 | 37.2 | 37.1 | 37.2 | - | 37.1 | 37.1 |

As can be seen from the results in Table 1, when the specimens of Examples 1 to 6 were subjected to flame retardancy testing in accordance with KS F ISO 5660-1, these specimens exhibited good flame retardancy having a residual layer thickness of 11 mm or more after the complete combustion. This was because the carbon layer expanded upon combustion could act as an insulating layer, which inhibited thermal transfer, thereby preventing thermal transfer to the rear side. Furthermore, it was confirmed that these specimens exhibited better mechanical strength and thermal insulation as compared with those of the comparative examples. On the other hand, the specimens of Comparative Examples 1-4 and 6-7 left little residual layer thickness, and in Comparative Example 5, extrusion was impossible.

Although some embodiments have been described herein, the present invention is not limited by these embodiments and can be conducted in various ways. Further, it should be understood by those skilled in the art that various modifications, variations, and alterations can be made without departing from the spirit and scope of the present invention. Therefore, these embodiments are given by way of illustration only, and should not be construed in any way as limiting the present invention.

## Claims

1. A flame retardant foam polystyrene bead, comprising:
(A) a mixed resin comprising (a1) about 90 wt% to about 99 wt% of a styrene resin and (a2) about 1 wt% to about 10 wt% of a char-generating thermoplastic resin;
(B) inorganic foam particles dispersed in the mixed resin; and
(C) a foaming agent impregnated into the mixed resin containing the dispersed inorganic foam particles.

2. The flame retardant foam polystyrene bead according to claim 1, wherein the styrene resin (a1) has a weight average molecular weight in the range of about 180,000 g/mol to about 300,000 g/mol.

3. The flame retardant foam polystyrene bead according to claim 1, wherein the char-generating thermoplastic resin (a2) has an oxygen bond, an aromatic group or a combination thereof, in a backbone of the char-generating thermoplastic resin.

4. The flame retardant foam polystyrene bead according to claim 1, wherein the char-generating thermoplastic resin (a2) is at least one selected from the group consisting of polycarbonate, polyphenylene ether, polyurethane, polyphenylene sulfide, polyester, and polyimide resins.

5. The flame retardant foam polystyrene bead according to claim 4, wherein the char-generating thermoplastic resin (a2) is at least one selected from the group consisting of polycarbonate, polyphenylene ether, and polyurethane resins.

6. The flame retardant foam polystyrene bead according to claim 1, wherein the inorganic foam particle (B) is at least one selected from the group consisting of expanded graphite, silicate, perlite and white sand.

7. The flame retardant foam polystyrene bead according to claim 1, wherein the inorganic foam particles (B) are present in an amount of about 3 parts by weight to about 50 parts by weight based on 100 parts by weight of the mixed resin (A).

8. The flame retardant foam polystyrene bead according to claim 1, wherein the inorganic foam particles (B) have an average particle diameter of about 170 µm to about 1,000 µm and an expansion temperature of 200°C or more.

9. The flame retardant foam polystyrene bead according to claim 1, wherein the foaming agent (C) is present in an amount of about 3 parts by weight to about 8 parts by weight based on 100 parts by weight of the mixed resin containing the dispersed inorganic foam particles.

10. The flame retardant foam polystyrene bead according to claim 1, wherein the flame retardant foam polystyrene bead further comprises at least one additive selected from the group consisting of antiblocking agents, nucleating agents, antioxidants, carbon particles, fillers, antistatic agents, plasticizers, pigments, dyes, thermal stabilizers, UV absorbers, and flame retardants.

11. The flame retardant foam polystyrene bead according to claim 1, wherein the flame retardant foam polystyrene bead has an average particle diameter of about 0.5 mm to about 3 mm.

12. A flame retardant polystyrene foam produced using the flame retardant foam polystyrene bead according to any one of claims 1 to 11 and having a residual layer thickness of about 10 mm or more when measured after heating a sample having a thickness of 50 mm at 50 kW/m² using a cone heater for 5 minutes in accordance with KS F ISO 5560-1.

13. A method for manufacturing a flame retardant foam polystyrene bead, comprising:
mixing (a1) a styrene resin, (a2) a char-generating thermoplastic resin and (B) inorganic foam particles to provide a mixed composition;
extruding the mixed composition; and
impregnating a foaming agent into the extruded mixed composition.

14. The method according to claim 13, wherein the mixed composition comprises 3 to 30 parts by weight of inorganic foam particles based on 100 parts by weight of the mixed resin comprising about 90 wt% to about 99 wt% of the styrene resin (a1) and about 1 wt% to about 10 wt% of the char-generating thermoplastic resin (a2).

15. The method according to claim 13, wherein the styrene resin (a1) has a weight average molecular weight in the range of about 180,000 g/mol to about 300,000 g/mol.

16. The method according to claim 15, wherein the styrene resin (a1) is in a pellet form containing at least one additive selected from the group consisting of nucleating agents, antioxidants, carbon particles, fillers, antistatic agents, plasticizers, pigments, dyes, thermal stabilizers, UV absorbers, and flame retardants.

17. The method according to claim 13, wherein the char-generating thermoplastic resin (a2) has an oxygen bond, an aromatic group or a combination thereof, in a backbone of the char-generating thermoplastic resin.

18. The method according to claim 13, wherein the char-generating thermoplastic resin (a2) is at least one selected from the group consisting of polycarbonate, polyphenylene ether, polyurethane, polyphenylene sulfide, polyester, and polyimide resins.

19. The method according to claim 13, wherein the inorganic foam particle (B) is at least one selected from the group consisting of expanded graphite, silicate, perlite and white sand.

20. The method according to claim 13, wherein the inorganic foam particles (B) have an average particle diameter of about 170 to 1,000 µm.

21. The method according to claim 13, wherein the mixed composition is extruded by adding at least one additive selected from the group consisting of antiblocking agents, nucleating agents, antioxidants, carbon particles, fillers, antistatic agents, plasticizers, pigments, dyes, thermal stabilizers, UV absorbers, and flame retardants.
